# EUROPÄISCHE PATENTSCHRIFT

(11) **EP 0 434 942 B1**
(45) Veröffentlichungstag und Bekanntmachung des Hinweises auf die Patenterteilung: **17.08.1994**
(21) Anmeldenummer: 90121364.5
(22) Anmeldetag: 08.11.1990
(51) Int. Cl.: B01D 25/21, B01D 25/28

(54) **Membranplatte für Filterpressen**
Membrane-plate for filter-presses
Membrane pour plateau filtre-presse

(30) Priorität: 29.12.1989 DE 3943259
(43) Veröffentlichungstag der Anmeldung: 03.07.1991
(73) Patentinhaber: RITTERSHAUS & BLECHER GMBH, 42369 Wuppertal (DE)
(72) Erfinder: Oelbermann, Max, W-5630 Remscheid (DE)

(56) Entgegenhaltungen:
- EP-A- 0 125 456
- DE-A- 2 712 753
- DE-A- 3 632 932
- FR-A- 2 585 264
- FR-A- 2 589 080

## Beschreibung

Die Erfindung betrifft eine Membranplatte für Filterpressen, bestehend aus einer Stützplatte, aus einem Rahmen und einer an ihrem Rand zwischen Stützplatte und Rahmen eingespannten Membran, welche mit ihrer dem Rahmen zugewandten Hauptseite gegen ein Filtertuch zwecks Auspressens des Filterkuchens drückbar ist, welche einwärts ihres Einspannrandes zwischen zwei etwa V-förmig divergierenden, zueinander spitzwinkelig geneigten Schmiegeflächen von Stützplatte und Rahmen eingefaßt ist und welche nach beiden Seiten elastisch auslenkbar ist.

Bei einer derartigen, durch die DE-A-29 33 096 bekannten Membranplatte ist eine ebene, gummituchartige Membran vorgesehen, die aus einem verhältnismäßig weichelastischen Material besteht, damit die Membran den abwechselnd durch den Filtrierdruck und den Preßdruck bewirkten Auslenkungen ohne Gefahr eines Abreißens an ihrem Einspannrand folgen kann. Bei diesen Auslenkungen treten aber erhebliche Zugbeanspruchungen innerhalb der Membran auf, was bei weichelastischen Membranen im Bereich des Einspannrandes zu einem sich mit jeder Auslenkung kumulierenden Materialkriechen mit der Folge führt, daß im Bereich des Einspannrandes Undichtigkeiten auftreten können. Durch die EP-A-70 473 und EP-A-125 456 ist es bekannt, bei derartigen Membranplatten ein Bewegungsspiel zwischen Rahmen und Stützplatte vorzusehen, so daß die Membran an ihrem Einspannrand bei jedem öffnen der Filterpresse gelüftet wird und sich die Membran hinsichtlich der Materialverkriechung jedesmal wieder zurückstellen kann, wodurch der kumulative Effekt behoben ist.

Solche weichelastischen Membranen sind aber sehr korrosionsanfällig bei aggressiven Medien, beispielsweise bei schwefelsäurehaltigem Filtriergut, und besitzen bei vielen industriellen Einsatzfällen von Filterpressen nur eine geringe Standzeit. Korrosionsbeständig sind dagegen hartelastische Membranplatten aus geeigneten Kunststoffmaterialien. Diese können aber nur sehr begrenzte Auslenkbewegungen ausführen, wobei auch dann noch eine große Gefahr besteht, daß solche harten Membranen an ihrem Einspannrand einreißen oder brechen. Für einen wirtschaftlichen Einsatz von Filterpressen ist aber von erheblicher Bedeutung, daß ein möglichst großer Filterkuchenraum vorgesehen werden kann, was zwangsläufig weite Auslenkwege für die Membranen bedeutet.

Durch die DE-A-27 12 753 sind Filterplatten bekannt, die aus einem verhältnismäßig dicken, starren Umfangsrahmen und aus einer zentralen, starren Platte bestehen, die dünner als der Umfangsrahmen ist und mit diesem über einen gewellten, auslenkbaren Zwischenbereich verbunden ist. Die Filterplatten liegen auf der Seite des Preßmediumraumes fast über die ganze Fläche hinweg an einer Stützplatte an, so daß sie keine kritische Belastung durch den Filtrationsdruck erfahren. Bei der unmittelbaren Beaufschlagung dieser Filterplatten mit dem Preßmediumdruck müssen die gewellten Zwischenbereiche dort einen weiten Auslenkweg ausführen ehe sie, wenn überhaupt, eine Abstützung auf dem komprimierten Filterkuchen finden.

Die gewellten Zwischenbereiche erfahren dabei eine hohe Zugbelastung durch den Preßmediumdruck und eine starke Biegebelastung an ihrer rahmenseitigen Wurzellinie, was mit der Zeit zu einer solchen Schwächung führt, daß die gewellten Zwischenbereiche vom Umfangsrahmen abreißen können. Zudem führen dort die äußeren Wellenkämme eine starke, zum Rand hin gerichtete Schwenkbewegung aus, wodurch es zu einer Faltenbildung bei dem an ihnen anliegenden Filtertuch kommen kann, was zu einem vorzeitigen Verschleiß der Filtertücher führt.

Der Erfindung liegt die Aufgabe zugrunde, eine für große Filterkuchenräume und auch für aggressive Filtermedien verwendbare Membranplatte zu schaffen, bei der die Gefahr eines Abreißens der Membran auch nach zahlreichen Auslenkbewegungen behoben ist und die auch diesbezüglich eine hohe Standzeit besitzt.

Ausgehend von einer Membranplatte der eingangs genannten Art, wird die Lösung dieser Aufgabe erfindungsgemäß dadurch erreicht, daß die Membran einwärts ihres Einspannrandes mit einem gewellten Bereich versehen ist, bei welchem die Wellenkämme parallel zum Einspannrand verlaufen, und daß mindestens der äußere, mit seinem Rücken zum Filtertuch hingewandte Wellenkamm zwischen den beiden Schmiegeflächen eingefaßt ist und sich bei einer Auslenkung in Richtung zum Filtertuch hin auf der Schmiegefläche des Rahmens abstützt.

Durch diese Maßnahmen wird zum einen erreicht, daß die bei einer Auslenkung auftretenden Zugkräfte auf das durch die Federungscharakteristik der gewellten Membranbereiche gegebene Maß begrenzt ist, so daß am Einspannrand keine kritischen Zugkräfte mehr auftreten. Noch entscheidender ist jedoch, daß die auf eine Auslenkung der Membran gerichteten Querkräfte auf einen breiten Bereich verteilt und unmittelbar angrenzend an den Einspannrand weitestgehend - oder wenn die Wellenkämme in ihrer Grundstellung an den Schmiegeflächen bereits anliegen - vollständig von den Schmiegeflächen aufgefangen werden. Die zwischen den Schmiegeflächen liegenden Wellenkämme werden, - auch wenn sie von Hause aus bereits an den Schmiegeflächen anliegen -, bei einer Druckbeaufschlagung der Membran bereits etwas aufgebogen und tragen somit zu einer Kräfteverteilung über einen größeren Bereich bei, wobei aber sichergestellt ist, daß die Membran in ihrem einwärts unmittelbar an den Einspannrand angrenzenden Übergangsbereich keine oder höchstens eine minimale Querbelastung erfährt. Bei Dauerversuchen hat die erfindungsgemäße Membran mehr als zehntausend Auslenkbewegungen schadlos überstanden.

In Weiterbildung der Erfindung kann vorgesehen werden, daß bei auf ihrer Fläche Stütznocken aufweisenden Stützplatte die Membran einwärts ihrer Stütznocken-Anlagefläche ebenfalls mit gewellten Bereichen versehen ist, so daß auch an diesen kritischen Stellen einer Überbeanspruchung der Membran bei ihren wechselseitigen Auslenkbewegungen sicher vorgebeugt ist.

Der Erfindung zufolge besteht die Membran vorzugsweise aus Polypropylen und weist eine Härte von Shore D 73 auf.

Damit auch bei einer solch harten Membran randseitig noch eine dichte Einspannung gewährleistet ist, kann in Weiterbildung der Erfindung vorgesehen werden, daß die Membran an ihrem Einspannrand beidseits mit Umfangsriefen versehen ist, die durch schmale Dichtlippen voneinander getrennt sind, die an den beiden Membranseiten jeweils auf Lücke gegeneinander versetzt sind.

Weitere Merkmale der Erfindung sind in den Unteransprüchen angegeben.

Die Erfindung wird im folgenden anhand der Zeichnung näher erläutert, in der zeigen:
- Fig. 1: im Vertikalquerschnitt einen Randbereich einer Membranplatte nach der Erfindung,
- Fig. 2: in Draufsicht einen Quadranten der Membranplatte nach Fig. 1,
- Fig. 3: in vergrößerter Darstellung eine Teil-Draufsicht auf den Bereich III der Membran nach Fig. 2,
- Fig. 4: einen Schnitt gemäß der Linie IV-IV,
- Fig. 5: einen Schnitt gemäß der Linie V-V,
- Fig. 6, 7 und 8: in vergrößerter, schematischer Darstellung die Grundstellung und die beiden Auslenkstellungen der Membran,
- Fig. 9: ein zweites Ausführungsbeispiel einer Membranplatte nach der Erfindung,
- Fig.10: in vergrößerter Darstellung den Teilbereich X in Fig. 9 und
- Fig.11: in vergrößerter Darstellung den Teilbereich XI in Fig. 9.

Die Membran besteht aus einer Stützplatte 1, einem umlaufenden Rahmen 2 und einer zwischen Stützplatte 1 und Rahmen 2 eingespannten Membranplatte 3, die aus verhältnismäßig hartem Kunststoffmaterial, speziell aus Polypropylen, hergestellt ist. Die Stützplatte 1 trägt an ihrem oberen Rand vorstehende Stifte 4, die zur Befestigung von zwei Filtertüchern 5, 6 dienen, welche die Membranplatte beidseitig überdecken. Zur Erzielung eines möglichst großen Filterkuchenraumes bzw. möglichst großer Filterkammern steht der Einspannrand der Stützplatte 1 beidseits erhaben über die beiden inneren Spiegelflächen 7, 8 der Platte vor. Wie in Verbindung mit den strichpunktiert angedeuteten, im Filterplattenpaket benachbarten Membranplatten ersichtlich, ist die Querabmessung der Filterkammer A, B im wesentlichen durch die Stärke des Rahmens 2 und die beidseitigen Randverdickungen der Stützplatte 1 bestimmt. Die Membran 3 ist folglich nach beiden Seiten hin innerhalb der Filterkammer A auslenkbar.

Der Einspannrand 9 der Membran 3 ist beidseits mit Umfangsriefen 10 versehen, die durch schmale Dichtlippen 11 voneinander getrennt sind, welche an beiden Membranseiten jeweils auf Lücke gegeneinander versetzt sind und über die Einspannflächen 12, 13 des äußersten, glattwandigen Membranrandes soweit hervorstehen, daß sich eine einwandfreie Abdichtung beim Einspannen der Membran zwischen Stützplatte 1 und Rahmen 2 ergibt.

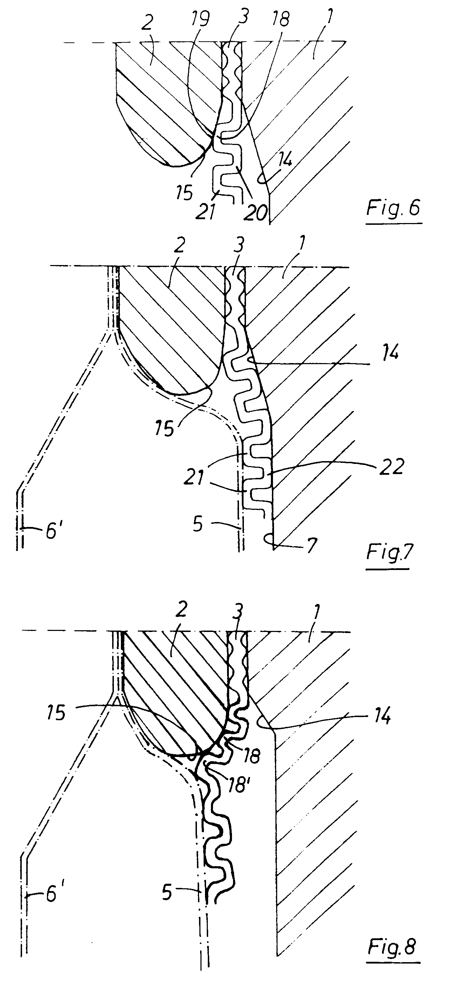

Einwärts des Einspannrandes 9 ist die Membran 3 zunächst ein Stück weit zwischen etwa V-förmig divergierenden, zueinander spitzwinklig geneigten Schmiegeflächen 14, 15 der Stützplatte 1 bzw. des Rahmens 2 eingefaßt. Einwärts ihres Einspannrandes 9 ist die Membran mit einem gewellten Bereich 16 versehen, der bis in den Zwickelgrund der beiden, jeweils gegenüber der Hauptebene der Filterplatte auseinander geneigten Schmiegeflächen 14, 15 hineinragt und an den sich einwärts der mit Filtratabfluß-Noppen 17 versehene Hauptbereich der Membran anschließt. Die Wellenkämme dieses gewellten Bereiches 16 verlaufen parallel zum Einspannrand. Wie insbesondere aus der vergrößerten, schematischen Darstellung nach Fig. 6 ersichtlich ist, ist der äußere Wellenkamm 18 vollständig zwischen den beiden Schmiegeflächen 14, 15 eingefaßt und ragt er mit seinem Rücken 19 in den von der rahmenseitigen Schmiegefläche 15 gebildeten Erweiterungsraum hinein, wobei beim Ausführungsbeispiel nach Fig. 6 der Rücken 19 sogar unmittelbar an der Schmiegefläche 15 in der Grundstellung anliegt. Alternativ kann der Rücken 19 einen tolerierten Abstand zur Schmiegefläche 15 haben.

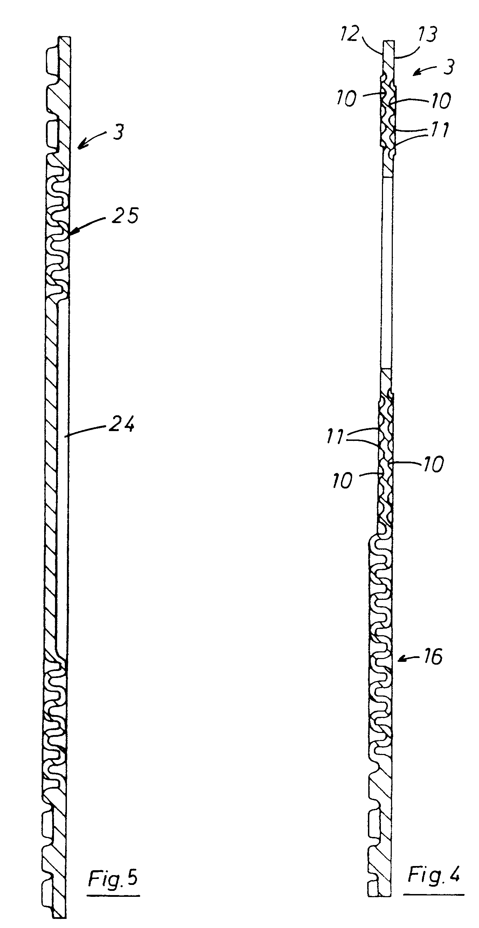

Die Höhe der Wellen im Bereich 16 ist um fast das Doppelte größer als die Stärke des Einspannrandes 9 der Membran 3 und etwa gleich der Stärke der Membran 3 in ihrem mittleren mit den Noppen 17 versehenen Bereich. Beim Ausführungsbeispiel liegen die der Stützplatte 1 zugewandten Wellenkämme 20 etwa in der Ebene der stützplattenseitigen Einspannfläche 13 der Membran 3, und die dem Rahmen 2 zugewandten Wellenkämme 21 stehen um ein Drittel bis die Hälfte der Stärke des Membraneinspannrandes 9 über die rahmenseitige Einspannfläche 12 der Membran 3 vor. Die Wellung im gewellten Bereich 16 kann sinusförmig, vgl. beispielsweise Fig. 4, oder rechteckförmig, vgl. insbesondere Fig. 6, sein.

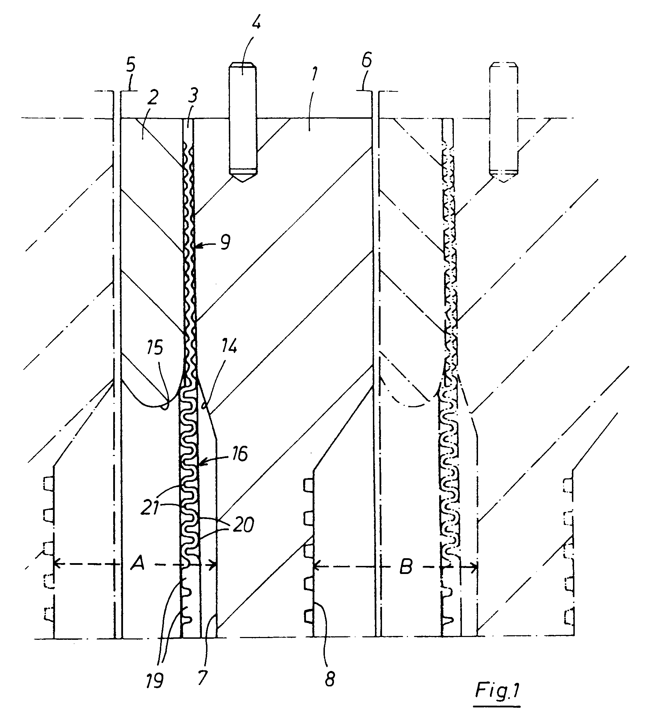

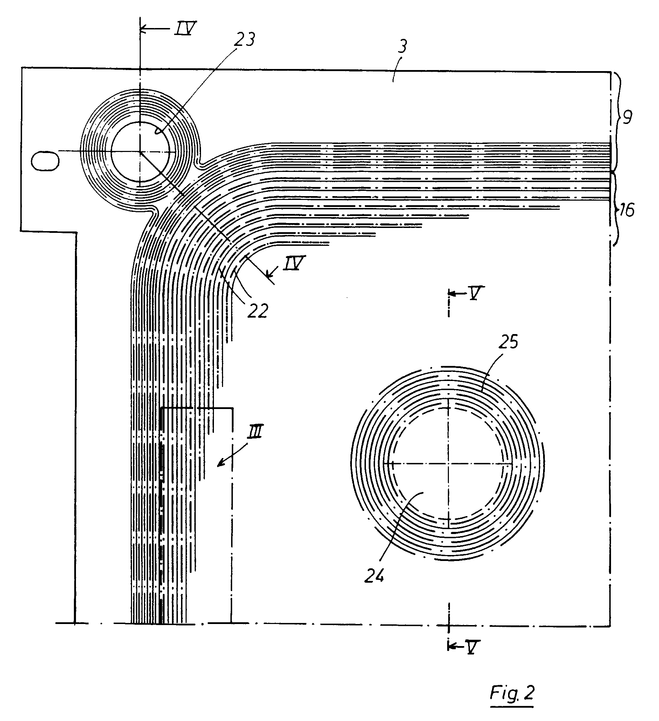

Wie aus Fig. 2 ersichtlich ist, ist im Falle von rechteckigen Membranplatten die Membran 3 im Bereich der Ecken mit einer wesentlich größeren Anzahl von Wellen 22 versehen und nimmt die Zahl der Wellen zur Membran-Seitenmitte hin schrittweise ab. Beim Ausführungsbeispiel ist die Membran 3 für eine Filterpresse geeignet, bei der die Trübezufuhr und/oder der Filtratabfluß und/oder die Preßmediumzuleitung über im Einspannrand des Filterplattenpaketes ausgebildete Kanäle erfolgt, so daß die Membran 3 in ihrem Einspannbereich 9 mit entsprechenden Durchbrüchen 23 versehen ist. Bei größeren, auf ihrer Fläche Stütznocken aufweisenden Stützplatten ist die Membran 3 rings um ihre Stütznocken-Anlagefläche 24 herum ebenfalls mit einem gewellten Bereich 25 versehen.

Im Falle einer Filterpresse mit mittiger Trübezufuhr ist die Membran - nicht gezeigt - mit einem mittigen Durchbruch versehen, und wird in üblicher Weise mittels Flansche an der Stützplatte festgespannt. Der Erfindung zufolge ist eine solche Membran in ihrem von den Flanschen erfaßten Einspannrand ebenfalls mit Riefen 10 und Dichtlippen 11 versehen, wobei rings um diesen Einspannbereich herum wiederum ein gewellter Bereich analog den gewellten Bereichen 16 bzw. 25 angeordnet wird.

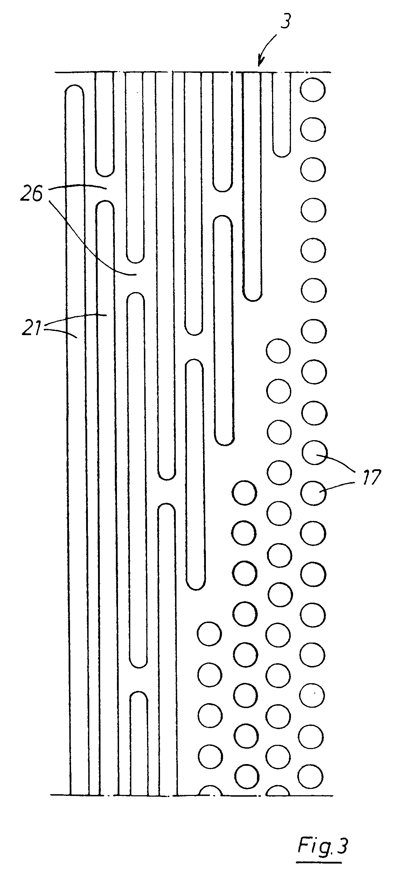

Wie aus Fig. 3 noch ersichtlich ist, sind die Wellenkämme 21 jeweils an mehreren Umfangsstellen der Membran durch flach belassene, dünne Membranbereiche 26 für einen Filtratablauf unterbrochen.

Fig. 6 bis 8 veranschaulichen die kräftemäßig geringe Beanspruchung der Membran 3 bei ihren Auslenkbewegungen. Während des Filtrationsvorganges wird das Filtriergut in den von zwei benachbarten Filtertüchern 5, 6' begrenzten Filterkuchenraum unter hohem Druck eingeführt, wobei sich das Filtertuch 5 an die Wellenkämme 21 der Membran 3 anlegt und die rückwärtigen Wellenkämme 20 bis zur Anlage an der Schmiegefläche 14 und der Spiegelfläche 7 der Stützplatte 1 auslenkt. Bei dieser, durch den Filtrierdruck bewirkten Auslenkung werden im Bereich des von den Schmiegeflächen 14, 15 gebildeten Zwickelgrundes keine örtlichen Belastungsspitzen auf die Membran ausgeübt.

Bei der besonders kritischen Auslenkung der Membran 3 durch den auf ihrer Rückseite ausgeübten Preßdruck zwecks Auspressen des Filterkuchens treffen die beiden äußeren Wellenkämme 18, 18' beim Ausführungsbeispiel nach Fig. 8 nach verhältnismäßig kurzem Auslenkweg mit ihrem Rücken auf die Schmiegefläche 15 des Rahmens 2 auf, wobei sich die Biegebeanspruchung über einen verhältnismäßig großen Wellenbereich hin verteilt und im Zwickelgrund nur verhältnismäßig geringe Biegekräfte auf die Membran ausgeübt werden.

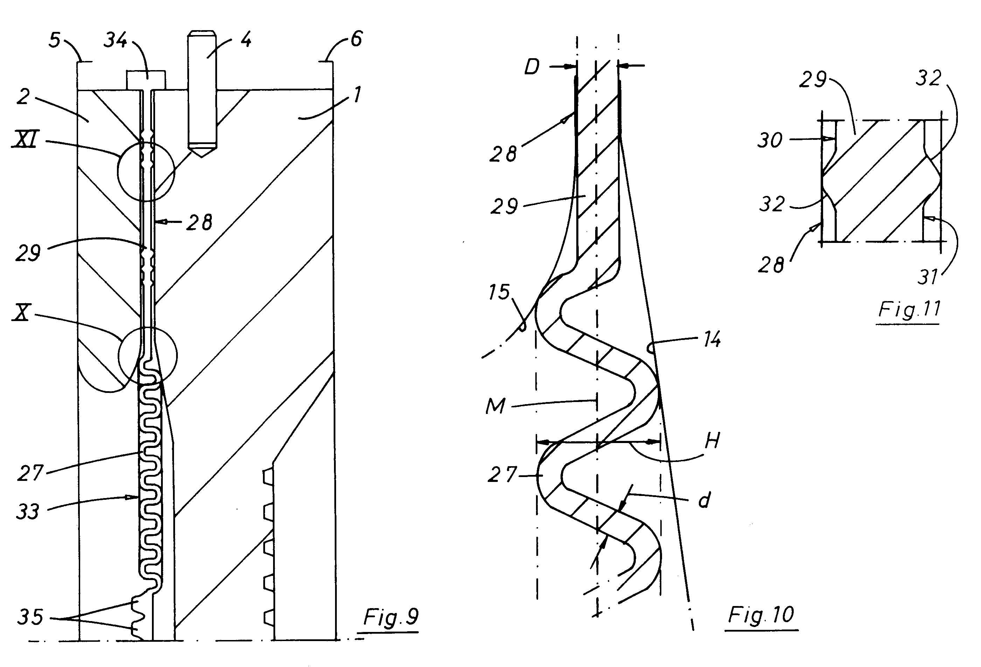

Beim Ausführungsbeispiel nach den Fig. 9 bis 11 ragen die Wellenkämme 27 nach beiden Seiten hin symmetrisch über die von dem Einspannrand 28 definierte Mittelebene M der Membran 29 vor. Der Einspannrand 28 besteht aus einem flachen, an beiden Einspannflächen 30, 31 mit sich gegenüberliegenden Dichtlippen 32 versehenen Membranstreifen. Die Stärke D des Einspannrandes 28 der Membran 29 ist etwa um das Anderthalbfache größer als die Stärke d der Membran im gewellten Bereich 33. Der Einspannrand 28 ist an seinem Außenrand mit einem umlaufenden Außenwulst 34 versehen, dessen Breite etwa gleich der Wellenhöhe H des gewellten Bereiches 33 ist. Die zum Filterkuchenraum gerichteten Noppen 35 ragen beim Ausführungsbeispiel nach den Fig. 9 bis 11 über die zu dieser Seite hin gerichteten Wellenkämme 27 des gewellten Bereiches 33 hinaus.

## Patentansprüche

1. Membranplatte für Filterpressen, bestehend aus einer Stützplatte (1), aus einem Rahmen (2) und einer an ihrem Rand zwischen Stützplatte und Rahmen eingespannten Membran (3), welche mit ihrer dem Rahmen (2) zugewandten Hauptseite gegen ein Filtertuch (5) zwecks Auspressens des Filterkuchens drückbar ist, welche einwärts ihres Einspannrandes (9) zwischen zwei etwa V-förmig divergierenden, zueinander spitzwinkelig geneigten Schmiegeflächen (14, 15) von Stützplatte (1) und Rahmen (2) eingefaßt ist und welche nach beiden Seiten elastisch auslenkbar ist, dadurch gekennzeichnet, daß die Membran (3) einwärts ihres Einspannrandes (9) mit einem gewellten Bereich (16) versehen ist, bei welchem die Wellenkämme (20, 21) parallel zum Einspannrand verlaufen, und daß mindestens der äußere, mit seinem Rücken (19) zum Filtertuch (5) hingewandte Wellenkamm (18) zwischen den beiden Schmiegeflächen (14, 15) eingefaßt ist und sich bei einer Auslenkung in Richtung zum Filtertuch (5) hin auf der Schmiegefläche (15) des Rahmens (2) abstützt.

2. Membranplatte nach den Ansprüchen 1, dadurch gekennzeichnet, daß die Wellenhöhe größer als die Stärke des Einspannrandes (9) der Membran (3) ist.

3. Membranplatte nach den Ansprüchen 1 und 2, dadurch gekennzeichnet, daß die Wellenhöhe etwa gleich der Stärke der Membran (3) in ihrem mittleren, mit Noppen (17) versehenen Bereich ist.

4. Membranplatte nach den Ansprüchen 2 oder 3, dadurch gekennzeichnet, daß die der Stützplatte (1) zugewandten Wellenkämme (20) in der Ebene der stützplattenseitigen Einspannfläche (13) der Membran (3) liegen und daß die dem Rahmen (2) zugewandten Wellenkämme (21) um ein Drittel bis die Hälfte der Stärke des Membraneinspannrandes (9) über die rahmenseitige Einspannfläche (12) der Membran (3) vorstehen.

5. Membranplatte nach einem der Ansprüche 1 bis 4, dadurch gekennzeichnet, daß die Wellung sinusförmig ist.

6. Membranplatte nach einem oder mehreren der Ansprüche 1 bis 4, dadurch gekennzeichnet, daß die Wellung im wesentlichen rechteckförmig ist.

7. Membranplatte nach einem oder mehreren der Ansprüche 1 bis 6, dadurch gekennzeichnet, daß bei auf ihrer Fläche Stütznocken aufweisenden Stützplatten die Membran (3) einwärts ihrer Stütznocken-Anlagefläche (24) ebenfalls mit gewellten Bereichen (25) versehen ist.

8. Membranplatte nach einem der Ansprüche 1 bis 7, dadurch gekennzeichnet, daß die Wellenkämme (21) jeweils an mehreren Umfangsstellen der Membran (3) durch flach belassene, dünne Membranbereiche (26) für einen Filtratablauf unterbrochen sind.

9. Membranplatte nach einem der Ansprüche 1 bis 8, dadurch gekennzeichnet, daß die Membran (3) an ihrem Einspannrand (9) beidseits mit Umfangsriefen (10) versehen ist, die durch schmale Dichtlippen (11) voneinander getrennt sind.

10. Membranplatte nach Anspruch 9, dadurch gekennzeichnet, daß die Dichtlippen (11) an den beiden Membranseiten jeweils auf Lücke gegeneinander versetzt sind.

11. Membranplatte nach einem oder mehreren der Ansprüche 1 bis 10, dadurch gekennzeichnet, daß die Membran (3) aus Polypropylen besteht und eine Härte von Shore D 73 aufweist.

12. Membranplatte nach einem oder mehreren der vorangegangenen Ansprüche, dadurch gekennzeichnet, daß bei rechteckigen Membranplatten die Membran (3) in den Eckbereichen eine größere Anzahl von Wellen (22) aufweist, deren Anzahl schrittweise zur Membran-Seitenmitte hin abnimmt.

13. Membranplatte nach einem oder mehreren der Ansprüche 1 bis 2 und 5 bis 12, dadurch gekennzeichnet, daß die Wellenkämme (27) nach beiden Seiten symmetrisch über die von dem Einspannrand (28) definierte Mittelebene (M) der Membran (29) vorstehen.

14. Membranplatte nach Anspruch 13, dadurch gekennzeichnet, daß die Materialstärke (D) der Membran (29) am Einspannrand (28) größer, z.B. um das Anderthalbfache, als die Materialstärke (d) der Membran im gewellten Bereich (33) ist.

15. Membranplatte nach den Ansprüchen 13 oder 14, dadurch gekennzeichnet, daß der Einspannrand (28) aus einem flachen, an beiden Einspannflächen (30, 31) mit sich gegenüberliegenden Dichtlippen (32) versehenen Membranstreifen besteht.

16. Membranplatte nach Anspruch 13, dadurch gekennzeichnet, daß der Einspannrand (28) mit einem umlaufenden Außenwulst (34) versehen ist, dessen Breite etwa gleich der Wellenhöhe (H) des gewellten Bereiches (33) ist.

## Claims

1. Membrane-plate for filter-presses, which consists of a supporting plate (1), of a frame (2) and of a membrane (3), fastened by its border between supporting plate and frame, whose main side, facing the frame (2), can be pressed against a filter cloth (5) for the purpose of pressing out the filter cake, and which (membrane) is contained, inward of its fastening border (9), between two bevelled areas (14,15) of the supporting plate (1) and frame (2) respectively, which diverge so as to roughly form a V-shape and are inclined at an acute angle to one another, and which (membrane) may be extended elastically to both sides, characterized in that the membrane (3) is equipped with a waved area (16) inward of its fastening border (9), the wave-crests (20,21) running parallel to the fastening border, and in that at least the outer wave-crest (18), whose rear (19) faced towards the filter cloth (5), is contained between the two bevelled surfaces (14,15) and, when the membrane is extended in the direction of the filter cloth (5), is supported against the bevelled surface (15) of the frame (2).

2. Membrane-plate as claimed in Claim 1, characterized in that the wave height is greater than the thickness of the fastening border (9) of the membrane (3).

3. Membrane-plate as claimed in Claims 1 and 2, characterized in that the wave height is roughly equal to the thickness of the central area of the membrane (3) equipped with burls (17).

4. Membrane-plate as claimed in Claims 2 or 3, characterized in that the wave-crests (20) facing towards the supporting plate (1) lie in the plane of the surface (13) of the membrane (3) fastened to the supporting-place side and in that the wave crests (21) facing the frame (2) project, by one third to one half of the thickness of the membrane fastening border (9), beyond the surface (12) of the membrane (3) fastened to the frame side.

5. Membrane-plate as claimed in Claims 1 to 4, characterized in that the waving is S-shaped.

6. Membrane-plate as claimed in one or more of Claims 1 to 4, characterized in that the waving is essentially rectangular.

7. Membrane-plate as claimed in one or more of Claims 1 to 6, characterized in that in the case of supporting plates with supporting cams on their surface, the membrane (3) is also equipped with waved areas (25) inward of its supporting cam contact surface (24).

8. Membrane-plate as claimed in one of Claims 1 to 7, characterized in that the wave-crests (21) are each interspersed at several points on the circumference of the membrane (3) by thin membrane areas (26), which have been left flat, to allow the filtrate to run off.

9. Membrane-plate as claimed in Claims 1 to 8, characterized in that the membrane (3) is equipped on both sides of its fastening border (9) with peripheral channels (10) which are separated from one another by narrow sealing lips (11).

10. Membrane-plate as claimed in Claim 9, characterized in that the dealing lips (11) on each side of the membrane are staggered with respect to those on the other side.

11. Membrane-plate according to one or more of Claims 1 to 10, characterized in that the membrane (3) is made of polypropylene and has a hardness of D 73 Shore.

12. Membrane-plate according to one or more of the previous claims, characterized in that in the case of rectangular membranes the corner areas of the membrane (3) have a larger number of waves (22), their number gradually reducing towards the middle of the side of the membrane.

13. Membrane-plate as claimed in one or more of Claims 1 to 2 and 5 to 12, characterized in that the wave crests (27) project symmetrically to both sides beyond the central plane (M) of the membrane (29) defined by the fastening border (28).

14. Membrane-plate as claimed in Claim 13, characterized in that the thickness of the material (D) of the membrane (29) at the fastening border (28) is greater, for example by one and a half times, than the thickness of material (d) of the membrane in the waved area (33).

15. Membrane-plate as claimed in Claims 13 to 14, characterized in that the fastening border (28) consists of a flat strip of membrane equipped on both fastening surfaces (30, 31) with sealing lips (32) positioned opposite one another.

16. Membrane-plate as claimed in Claim 13, characterized in that the fastening border (28) is equipped with a peripheral exterior protrusion (34) roughly equal in width to the wave height (H) of the waved area (33).

## Revendications

1. Plateau-membrane, pour filtres-presses, composé d'une plaque d'appui (1), d'un cadre (2) et d'une membrane (3), enserrée à son bord entre la plaque d'appui et le cadre et susceptible d'être pressée, par sa face principale tournée vers le cadre (2), contre une toile filtrante (5), en vue d'exprimer le gâteau de filtrage, membrane susceptible d'être enchâssée dans la zone intérieure à son bord de serrage (9), entre deux faces d'adaptation (14, 15), inclinées à angle aigu l'une par rapport à l'autre en divergeant à peu près en V, appartenant à la plaque d'appui (1) et au cadre (2), et susceptible d'être déformée élastiquement des deux côtés, caractérisé en ce que la membrane (3) est pourvue intérieurement à son bord de serrage (9) d'une zone ondulée (16), dans laquelle les ondulations (20, 21) s'étendent parallèlement au bord de serrage, et en ce qu'au moins l'ondulation (18) extérieure, dont le dos (19) est orienté vers la toile de filtrage (5), est enserrée entre les deux faces d'adaptation (14, 15), et prend appui sur la face d'adaptation (15) du cadre (2) lorsque se produit une déformation en direction de la toile de filtrage (5).

2. Plateau-membrane selon la revendication 1, caractérisé en ce que la hauteur d'ondulation est supérieure à l'épaisseur de la bordure de serrage (9) de la membrane (3).

3. Plateau-membrane selon les revendications 1 ou 2, caractérisé en ce que la hauteur d'ondulation est à peu près égale à l'épaisseur de la membrane (3) dans sa zone centrale, pourvue de boutons (17).

4. Plateau-membrane selon l'une des revendications 2 ou 3, caractérisé en ce que les ondulations (20), tournées vers la plaque d'appui (1), sont situées dans le plan de la surface de serrage (13) située côté plaque d'appui de la membrane (3) et en ce que les ondulations (21), tournées vers le cadre (2), font saillie d'un tiers à la moitié de l'épaisseur du bord de serrage (9) de la membrane, au-dessus de la surface de serrage (12), côté cadre, de la membrane (3).

5. Plateau-membrane selon l'une des revendications 1 à 4, caractérisé en ce que l'ondulation est sinusoïdale.

6. Plateau-membrane selon l'une des revendications 1 à 4, caractérisé en ce que l'ondulation est sensiblement rectangulaire.

7. Plateau-membrane selon l'une ou plusieurs des revendications 1 à 6, caractérisé en ce que, dans le cas où les plaques d'appui présentent sur leur surface des boutons d'appui, la membrane (3) est pourvue, intérieurement à sa surface d'appui, de boutons (24) également de zones ondulées (25).

8. Plateau-membrane selon l'une des revendications 1 à 7, caractérisé en ce que les ondulations (21) sont chacune interrompues, en plusieurs points de la périphérie de la membrane (3), de zones de membrane (26) minces, laissées planes, pour permettre une évacuation du filtrat.

9. Plateau-membrane selon l'une des revendications 1 à 8, caractérisé en ce que la membrane (3) est pourvue sur son bord de serrage (9), de part et d'autre, de cavités périphériques (10), séparées les unes des autres par d'étroites lèvres d'étanchéité (11).

10. Plateau-membrane selon la revendication 9, caractérisé en ce que les lèvres d'étanchéité (11) situées des deux côtés de la membrane sont décalées chacune les unes par rapport aux autres, en laissant un vide.

11. Plateau-membrane selon l'une ou plusieurs des revendications 1 à 10, caractérisé en ce que la membrane (3) est en polypropylène et présente une dureté Shore D 73.

12. Plateau-membrane selon l'une ou plusieurs des revendications précédentes, caractérisé en ce que, dans le cas où les plateaux membranes sont rectangulaires, la membrane (3) présente, dans les zones d'angle, un nombre d'ondulations (22) supérieur, ce nombre allant en diminuant par étapes en direction du centre de la face de la membrane.

13. Plateau-membrane selon l'une ou plusieurs des revendications 1 à 2 et 5 à 12, caractérisé en ce que les ondulations (27) font saillie des deux côtés symétriquement, au-dessus du plan médian (M) de membrane (29) défini par le bord de serrage (28).

14. Plateau-membrane selon la revendication 13, caractérisé en ce que l'épaisseur de matériau (D) de la membrane (29) sur le bord de serrage (28) est supérieur, par exemple de une fois et demi, à l'épaisseur du matériau (d) de la membrane dans la zone ondulée (33).

15. Plateau-membrane selon les revendications 13 ou 14, caractérisé en ce que le bord de serrage (28) est composé d'une bande de membrane plate, pourvue, sur les deux surfaces de serrage (30, 31), de lèvres d'étanchéité (32) opposées.

16. Plateau-membrane selon la revendication 13, caractérisé en ce que le bord de serrage (28) est pourvu d'un bourrelet extérieur (34) faisant le pourtour, dont la largeur est à peu près égale à la hauteur d'ondulation (H) de la zone ondulée (33).
